Europäisches Patentamt

European Patent Office

Office européen des brevets

(19)

(11) Numéro de publication : **0 332 536 B1**

(12) # FASCICULE DE BREVET EUROPEEN

(45) Date de publication du fascicule du brevet :
**29.07.92 Bulletin 92/31**

(51) Int. Cl.[5] : **C10G 11/18**, **B01J 38/34**

(21) Numéro de dépôt : **89400652.7**

(22) Date de dépôt : **08.03.89**

(54) **Procédé et dispositif de régénération en lit fluidisé d'un catalyseur.**

(30) Priorité : **09.03.88 FR 8803030**
**08.07.88 FR 8809441**

(43) Date de publication de la demande :
**13.09.89 Bulletin 89/37**

(45) Mention de la délivrance du brevet :
**29.07.92 Bulletin 92/31**

(84) Etats contractants désignés :
**DE ES FR GB IT**

(56) Documents cités :
**EP-A- 0 092 065**
**EP-A- 0 101 765**
**EP-A- 0 236 609**
**US-A- 4 332 674**
**US-A- 4 430 201**
**US-A- 4 595 567**

(73) Titulaire : **TOTAL RAFFINAGE DISTRIBUTION
S.A.**
**84, rue de Villiers**
**F-92538 Levallois Perret Cédex (FR)**
Titulaire : **INSTITUT FRANCAIS DU PETROLE
ORGANISME FRANCAIS DIT:**
**Boîte Postale 311**
**F-92506 Rueil-Malmaison Cédex (FR)**

(72) Inventeur : **Mauleon, Jean-Louis**
**22, Avenue de l'Abreuvoir**
**F-78160 Marly le Roi (FR)**
Inventeur : **Sigaud, Jean-Bernard**
**18, Boulevard de la République**
**F-92430 Vaucresson (FR)**
Inventeur : **Pontier, Renaud**
**Le Village**
**F-38200 Luzinay (FR)**
Inventeur : **Hoffmann, Frédéric**
**68, Quai de Jemmapes**
**F-75010 Paris (FR)**

(74) Mandataire : **Jolly, Jean-Pierre et al**
**Cabinet Jolly 54, rue de Clichy**
**F-75009 Paris (FR)**

**Description**

La présente invention concerne un procédé de régénération d'un catalyseur en lit fluidisé et un dispositif pour la mise en oeuvre de ce procédé. L'invention concerne plus spécialement la régénération en lit fluidisé de catalyseurs particulièrement chargés en résidus hydrocarbonés et en coke, par suite d'une réaction avec une charge d'hydrocarbures. Elle s'applique notamment à la régénération de catalyseurs d'hydrotraitement, de craquage ou d'hydrocraquage catalytique de reformage, ou encore à la régénération de masses de contact pour craquage thermique.

On sait que l'industrie pétrolière utilise de façon usuelle des catalyseurs, en particulier dans les procédés de craquage au cours desquels des molécules d'hydrocarbures à haut poids moléculaire et à point d'ébullition élevé sont scindées en molécules plus petites, convenant à l'usage recherché et dont les températures d'ébullition sont plus faibles.

Le procédé le plus couramment employé dans ce but, à l'heure actuelle, est le procédé de craquage catalytique à l'état fluide (en anglais Fluid Catalytic Cracking ou encore procédé FCC). Dans ce type de procédé, la charge d'hydrocarbures est simultanément vaporisée et mise en contact à haute température avec un catalyseur de craquage, qui est maintenu en suspension dans les vapeurs de la charge. Après avoir atteint par craquage la gamme de poids moléculaires désirée, avec un abaissement correspondant des points d'ébullition, le catalyseur est séparé des produits obtenus.

Dans les procédés de ce type, la réduction souhaitée des points d'ébullition résulte de réactions catalytiques et thermiques contrôlées. Ces réactions interviennent de façon quasi-instantanée lorsque la charge est vaporisée et mise en contact avec le catalyseur. Celui-ci se désactive cependant rapidement, pendant le court laps de temps où il est en contact avec la charge, du fait d'une adsorption d'hydrocarbures et de la formation d'un dépôt de coke sur les sites actifs. Il est alors nécessaire de stripper en continu ce catalyseur désactivé, par exemple à la vapeur, pour récupérer les hydrocarbures adsorbés ou entraînés, puis de le réactiver, généralement en continu, sans altérer ses caractéristiques, par exemple en procédant à une combustion contrôlée du coke et des hydrocarbures qui sont restés adsorbés, dans une section de régénération à un ou plusieurs étages, avant de recycler le catalyseur régénéré vers la zone réactionnelle. De l'air de combustion est injecté à la base du régénérateur, tandis qu'à la partie supérieure de celui-ci sont prévus des cyclones permettant de séparer le gaz de combustion des particules de catalyseur entraînées. Le catalyseur ainsi régénéré est ensuite évacué, généralement à la partie inférieure du régénérateur, puis recyclé vers la base de l'élévateur ou "riser", dans lequel se produit la réaction de craquage.

Le procédé FCC est naturellement mis en oeuvre de façon que l'unité de craquage soit en équilibre thermique. Autrement dit, l'alimentation en catalyseur chaud régénéré doit être telle qu'elle puisse répondre aux diverses exigences thermiques de la section réactionnelle, à savoir, en particulier :
- le préchauffage de la charge liquide,
- la vaporisation de cette charge,
- l'apport de calories exigé par les réactions impliquées, lesquelles, globalement, sont endothermiques,
- les pertes de chaleur de l'unité.

La quantité de coke déposé sur le catalyseur ainsi que le mode de régénération déterminent la température finale atteinte par le catalyseur dans la zone de régénération, car les calories provenant de la combustion servent à réchauffer l'air et les gaz de combustion ainsi que les particules de catalyseur. En régime de fonctionnement, la quantité de coke produite dans l'unité de craquage sera donc sensiblement constante, si l'équilibre thermique n'est pas modifié par des contraintes extérieures.

En particulier, lorsqu'on procède au craquage catalytique de charges composées d'hydrocarbures à haut point d'ébullition (généralement supérieur à 550°C), ou de charges ayant une teneur en carbone Conradson élevée et une concentration importante en métaux, des quantités importantes de coke et d'hydrocarbures lourds peuvent se déposer sur le catalyseur. La combustion, pendant la régénération, peut alors provoquer un dégagement substantiel de chaleur, qui, non seulement, peut aller au-delà des limites métallurgiques de l'appareillage, mais qui peut également être une source de désactivation du catalyseur, compte-tenu de son environnement (taux d'humidité, taux de contamination par métaux lourds, par des métaux alcalins etc...).

Pour limiter ces inconvénients, il a d'abord été proposé, selon l'art antérieur, de pallier l'excès de coke formé en limitant la température de régénération à une valeur généralement inférieure à 750°C, par exemple à l'aide d'échangeurs thermiques placés dans la chambre de régénération. La limitation en température est alors compensée par une augmentation du rapport massique du catalyseur par rapport à la charge (communément appelé "rapport C/O"). Cette solution a cependant ses limites, car une production trop élevée de coke nuit à la valorisation de la charge par diminution des rendements et conduit aussi à un surdimensionnement du régénérateur et des annexes ; elle augmente aussi la production de fumées riches en $NO_x$ et $SO_x$.

Il a ensuite été proposé de réaliser une régénération en deux zones, où la combustion fonctionne en tout ou partie à co-courant de catalyseur et de fluide oxydant (voir, par exemple, les brevets US 4.035.284

2

et FR 2.186.291), de façon à minimiser le temps de séjour du catalyseur à température relativement élevée, sans toutefois dépasser 750°C, pour ne pas diminuer l'activité du catalyseur. Dans les deux cas précités, la température de régénération est néanmoins toujours limitée par le fait que les gaz de combustion contiennent de la vapeur d'eau dégagée par la combustion des hydrocarbures lourds contenus dans le coke ou résultant du strippage, ce qui est rédhibitoire au-delà de 730-750°C, du fait du comportement à cette temperature des oxydes métalliques, en particulier des oxydes de vanadium, en présence de sodium.

On a donc envisagé une troisième solution (voir brevets US 4.332.674 et FR 2.186.291), consistant à ne brûler qu'une partie du coke et des hydrocarbures déposés sur le catalyseur à température modérée, pendant une première étape de régénération, dans une chambre possédant son propre dispositif d'évacuation des effluents gazeux, de façon à maintenir le catalyseur au-dessous d'un maximum d'environ 700°C, afin que les sites actifs du catalyseur ne soient pas endommagés par la vapeur d'eau provenant soit de l'étape de strippage, soit de la combustion des hydrocarbures encore présents dans le coke sur le catalyseur. Cette limitation de la température, au cours d'une première étape de régénération, est généralement obtenue par limitation en dessous de la stoechiométrie de la quantité d'air de combustion, ce qui conduit à une combustion ménagée du carbone en CO, de préférence à celle en $CO_2$. Ensuite, au cours d'une deuxième étape, dans une seconde chambre de régénération distincte de la précédente, la combustion complète du carbone restant sur le catalyseur n'a plus à être limitée en température, du fait de l'élimination préalable de la vapeur d'eau. Cette seconde étape permet alors de laisser monter la température jusqu'à l'équilibre thermique (jusqu'à éventuellement 950°C), grâce à un excès stoechiométrique d'oxygène qui favorise la combustion en $CO_2$, à condition toutefois de bien maîtriser les contraintes métallurgiques de l'installation, par exemple en plaçant les cyclones et les puits de déversement du catalyseur à l'extérieur de la zone de combustion, de façon à en protéger les parties métalliques à l'aide de réfractaires internes.

Pour régénérer du catalyseur fortement coké à haute température, il est donc préférable de procéder à une combustion en deux zones distinctes, munies de dispositifs propres de séparation des gaz effluents, ce qui permet au catalyseur régénéré à haute température de ne plus être en contact avec la vapeur d'eau formée lors de la première étape de régénération. Ainsi, 30 à 70% du coke déposé peuvent être brûlés au cours de la première étape de régénération à une température moyenne inférieure à 700°C et, de préférence, inférieure à 650°C et les 30 à 70% de carbone restant sur le catalyseur sont brûlés dans le lit fluidisé ou entraînés du second régénérateur sans restriction de température.

Cette solution, consistant à opérer avec une température de régénération du second régénérateur comprise entre 750 et 950°C, suivant le but recherché ou suivant le type de charge traitée, présente encore des inconvénients : en effet, il est des cas où une température trop élevée de régénération peut conduire à des perfomances dégradées, en raison d'une désactivation trop rapide de certains catalyseurs ou encore peut conduire à une circulation de catalyseur chaud inférieure à celle théoriquement souhaitée par une conversion optimale.

Il serait donc souhaitable de limiter la température de chacun des régénérateurs à l'aide de plusieurs échangeurs thermiques, mais cela implique un surcoût important et des difficultés de régulation de la température de chacune des chambres.

La présente invention vise à proposer une solution simple, permettant d'optimiser la température dans les deux chambres de régénération et d'adapter spécifiquement la température finale du catalyseur régénéré aux besoins de la charge à traiter dans l'unité de conversion.

La présente invention a donc pour premier objet un procédé de régénération en continu d'un catalyseur, par combustion en lit fluidisé du coke déposé sur ce catalyseur au cours d'une réaction de conversion d'hydrocarbures, ce procédé étant du type dans lequel une proportion d'environ 50 à 90% dudit coke est brûlée dans une première étape, à une température $T_1$ ne dépassant pas environ 730°C et, de préférence, comprise entre 650 et 710°C, dans une première chambre de régénération fonctionnant en lit fluidisé, où les grains de catalyseur à régénérer sont introduits essentiellement à contre-courant d'un fluide contenant de l'oxygène, les effluents gazeux de cette chambre, contenant la vapeur d'eau entraînée ou formée au cours de ladite combustion, étant écacués par un dispositif propre à cette première chambre, tandis que les 10 à 50% de coke résiduel sont brûlés au cours d'une deuxième étape de régénération, en présence d'un fluide contenant un excès d'oxygène par rapport à la stoechiométrie de la combustion, à une température $T_2$ supérieure à $T_1$ et inférieure à 950°C et, de préférence, à 910°C, dans une seconde chambre de régénération distincte de la première, ledit procédé étant caractérisé en ce que la température $T_2$ des grains de catalyseur régénéré provenant de la deuxième chambre de régénération et recyclés à la zone réactionnelle de conversion est maintenue à une valeur prédéterminée en fonction des besoins de la zone réactionnelle, par prélèvement d'une quantité contrôlée du catalyseur de la seconde chambre et par refroidissement de celui-ci à un niveau de température $T_3$ inférieur à $T_1$ et compris entre 400 et 700°C et, de préférence, entre 450 et 600°C, la quantité de catalyseur prélevée dans la seconde chambre de régénération et refroidie étant inférieure à 150% en poids et, de préférence, de 15 à 50% en poids de la masse de catalyseur en circulation dans la première chambre de régénération, cette fraction de catalyseur ainsi refroidie étant essentiellement réintroduite dans le lit fluidisé de la première chambre de régénération, dont la température de combustion est maintenue sensiblement égale à la valeur $T_1$ par une modification appropriée de la quantité de fluide contenant de l'oxygène introduite dans cette chambre, l'accroissement du débit du fluide oxydant alimentant la première chambre de régénération, consécutif à l'introduction dans celle-ci du catalyseur refroidi, étant compris entre 1 et 50% et, de préférence, entre 10 et 20% du débit normal de ce fluide, en l'absence d'introduction du catalyseur refoidi.

Le procédé selon l'invention permet ainsi, par augmentation du débit d'oxygène dans la première chambre, d'augmenter la combustion de coke, qui va alors dégager plus de calories et compenser le refroidissement provoqué par l'arrivée du catalyseur refroidi dans l'échangeur thermique, ce qui permet de maintenir la température $T_1$ à une valeur optimum proche de 710°C, et d'envoyer à la deuxième chambre de régénération un catalyseur contenant moins de coke. Il est ainsi possible d'abaisser la température finale $T_2$ résultant de la combustion complète du coke en présence d'un excès d'oxygène.

Par excès d'oxygène dans la seconde chambre de régénération, on entend une proportion d'oxygène supérieure à la stoechiométrie de la réaction permettant de transformer le carbone essentiellement en dioxyde de carbone.

Il a certes déjà été proposé (voir EP-A-0 101 765) de prélever dans un régénérateur une fraction du catalyseur régénéré, de le refroidir et de le réinjecter à la base de ce régénérateur, mais celui-ci ne présentait qu'une chambre de régénération et on n'y retrouve donc pas les étapes caractéristiques du procédé conforme à l'invention.

La combinaison des étapes de ce procédé conduit à un certain nombre d'avantages par rapport aux solutions proposées selon l'art antérieur.

Tout d'abord, le catalyseur régénéré est adapté à une température qui correspond mieux aux besoins de l'unité, en particulier en ce qui concerne, d'une part, la vaporisation de la charge injectée et, d'autre part, le rapport $\frac{C}{O}$ (catalyseur sur charge) que l'on peut optimiser. Cette température est donc moins liée que dans la technique antérieure à la différence entre les quantités de coke présentes sur le catalyseur à l'entrée et à la sortie de la zone de régénération (différence dite "delta coke") ; elle est maintenant déterminée pour répondre aux seuls besoins thermiques de l'unité. Le procédé selon l'invention permet donc le choix d'un rapport massique optimal entre le catalyseur et la charge. Ce choix contribue à l'obtention d'un indice d'octane élevé et à l'augmentation de la conversion de la charge. De plus, du fait de la dilution du catalyseur désactivé de la première chambre de régénération par du catalyseur au moins partiellement régénéré provenant de la seconde chambre, la cinétique de combustion est telle qu'on observe moins de points chauds. La température plus homogène qui en résulte permet de se rapprocher plus efficacement de la température limite de stabilité du catalyseur (environ 710°C à 750°C, selon le temps de séjour et la température du catalyseur) en présence de vapeur d'eau, ce qui contribue à augmenter encore plus (jusqu'à 90% et plus) le taux de combustion du coke dans la première chambre du régénérateur sans dépasser une température $T_1$ prédéterminée.

Par ailleurs, en limitant au strict minimum le temps de séjour à haute température des particules de catalyseur dans la deuxième zone de régénération (puisqu' il reste peu de coke à brûler), par réduction de la taille du régénérateur et/ou de son inventaire, on réduit également la possibilité de désactivation du catalyseur.

De plus, le catalyseur étant moins désactivé que dans les unités de type classique, l'appoint en catalyseur, qui est généralement de 0,5 à 10 kg de catalyseur par tonne de charge injectée (quantité qui varie essentiellement avec la teneur en métaux de la charge et avec la température finale du catalyseur régénéré), peut maintenant être diminué dans une proportion notable (de l'ordre de 25 à 50%), d'où une économie directe sur les coûts opératoires de l'unité de craquage considérée et une maintenance plus aisée de l'activité catalytique au niveau souhaité.

Cet appoint en catalyseur étant notablement diminué, la masse de catalyseur qui circule dans l'unité est beaucoup plus homogène, sur le plan de l'activité catalytique, ce qui se traduit pas une meilleure sélectivité et, donc, par des rendements améliorés en produits recherchés, (essences ou gasoles suivant les cas), avec pour conséquence une meilleure valorisation des effluents de l'unité de craquage.

Enfin, la diminution de la taille des équipements de la seconde zone de régénération (dispositif d'amenée du catalyseur, moyen d'injection des gaz de combustion, et séparateur du catalyseur régénéré), qui résulte du fait que la majeure partie du coke a été éliminée au cours de la première étape, permet une diminution sensible des coûts de construction de l'unité de craquage.

De manière plus détaillée, on peut mettre en oeuvre le procédé selon l'invention de la façon suivante :

a- on introduit le catalyseur à régénérer et le fluide contenant de l'oxygène dans la première chambre de régénération, ledit fluide s'écoulant de bas en haut à contre-courant du catalyseur ;

b- on sépare les effluents gazeux dans la partie supérieure de ladite première chambre de régénération et l'on prélève le catalyseur partiellement régénéré à la base de cette chambre pour l'envoyer dans la deuxième chambre de régénération, où l'on réalise ladite seconde étape de régénération, à température plus élevée ;

c- on reprend une partie du catalyseur provenant de la seconde chambre dans un échangeur thermique, d'une part, pour refroidir le catalyseur et, d'autre part, pour récupérer de la chaleur ;

d- on soutire ledit catalyseur ainsi refroidi, et on le recycle dans le lit fluidisé de la première chambre de régénération.

Le catalyseur provenant de la seconde chambre de régénération peut s'écouler de haut en bas, par gravité, dans l'échangeur thermique.

Il peut aussi s'y déplacer de bas en haut en lit fluidisé, de préférence dense, le catalyseur refroidi débordant ensuite du dit échangeur pour pénétrer dans la première chambre de régénération au voisinage du lit fluidisé dense de cette première chambre.

Dans cette dernière forme de mise en oeuvre, comme le catalyseur circule de bas en haut dans l'échangeur de chaleur (zone de refroidissement), le risque de rencontrer des zones mortes dans l'échangeur est minimisé. Le déplacement ascendant du catalyseur évite les zones de stagnation où l'échange serait diminué ; l'écoulement est donc meilleur. Par ailleurs, l'évacuation du catalyseur, qui s'effectue par débordement, entraîne un niveau sensiblement constant dans l'échangeur, ce qui permet une bonne stabilité de l'échange, les surfaces d'échange étant constantes.

Selon une autre caractéristique de cette forme de mise en oeuvre du procédé de l'invention, on peut ajuster la vitesse de circulation du catalyseur régénéré et chaud dans l'échangeur, en introduisant un fluide gazeux de fluidisation à la base de l'échangeur par un anneau de fluidisation. Ce fluide, de préférence de l'air, est introduit à une vitesse comprise généralement entre 0,1 et 1 m/s et, de préférence, comprise entre 0,3 et 0,5 m/s. A ces valeurs préférées, on a observé un meilleur coefficient d'échange thermique.

Selon une autre caractéristique de cette forme de mise en oeuvre, on fait généralement s'écouler de haut en bas le catalyseur chaud, avant son introduction dans l'échangeur, depuis la deuxième zone de régénération jusqu'à l'échangeur thermique, par une conduite tubulaire sensiblement allongée, puis par une zone coudée, de préférence semi-circulaire, située en amont de l'échangeur. On maintient généralement la masse volumique du catalyseur sensiblement à une valeur correspondant à une fluidisation sans bulle dans cette conduite par au moins une injection d'un premier fluide d'injection. On injectera en général de 0,05 à 0,4 kg/s/m² de section tubulaire et avantageusement de 0,1 à 0,2 kg/s/m² de section d'un premier fluide d'aération qui peut-être de l'air et avantageusement de la vapeur d'eau. Chaque niveau d'injection peut être distant de 0,5 à 2 m du suivant, et de préférence de 0,6 à 1 m. Comme cette masse volumique du catalyseur est cependant supérieure à celle du catalyseur dans l'échangeur, l'introduction de ce dernier dans l'échangeur s'effectue sans difficulté.

Selon une autre caractéristique du procédé selon l'invention, on peut réguler le débit de catalyseur dans l'échangeur par une vanne de régulation disposée en amont de l'échangeur sur la conduite tubulaire.

Dans la forme de mise en oeuvre où le catalyseur se déplace de bas en haut dans l'échangeur, on peut se dispenser de cette vanne de régulation et injecter au moins une fois un second fluide d'aération dans la zone coudée, de préférence dans sa partie la plus basse, à un débit compris généralement entre 0,01 et 0,05 kg d'air/s/m² de section et, de préférence, entre 0,02 et 0,03 kg d'air/s/m².

Dans cette forme de mise en oeuvre, le catalyseur, débordant de l'échangeur peut être évacué par le fond supérieur de l'échangeur ou par une conduite de sortie latérale disposée dans la partie supérieure de l'échangeur, de préférence au dessus des surfaces internes d'échange qui sont de ce fait utilisées à leur maximum.

La quantité de catalyseur refroidi par l'échangeur est généralement inférieure à 150% en poids du catalyseur en circulation dans la première zone de régénération ; on a observé qu'on obtenait un excellent taux de régénération avec une quantité de catalyseur refroidi comprise entre environ 15 et 50% en poids.

Comme indiqué ci-dessus, la température du catalyseur provenant de la deuxième chambre de régénération sera amenée, d'une façon générale, d'une température d'environ 710 à 900°C, à une température comprise entre 400 et 700°C et, de préférence, entre 450 et 600°C.

En conséquence, l'augmentation du débit de fluide oxydant pour compenser le refroidissement dû à l'arrivée de catalyseur refroidi dans la première chambre de régénération pourra être de l'ordre de 1 à 50% et, de préférence, de 10 à 20%, par rapport au débit normalement requis sans utilisation de l'échangeur thermique.

Dans ces conditions de combustion conformes à la présente invention, le rapport $CO/CO_2$ dans la première chambre de régénération est généralement compris entre 0,3 et 1,5 et, de préférence, entre 0,5 et 1,3.

Selon un mode particulièrement avantageux de mise en oeuvre de la présente invention, on refroidit le catalyseur du deuxième régénérateur à l'aide d'un échangeur thermique tubulaire de type connu en soi, dans lequel on fait circuler un fluide de refroidissement, par exemple de l'air, de l'eau, de la vapeur d'eau ou des mélanges de ces fluides, et l'on extrait ce fluide de l'échangeur à une température généralement comprise entre 300 et 750°C, ce qui est particulièrement avantageux à ce niveau de température ; en particulier, il est possible de réutiliser cette vapeur, dont la température est élevée, pour améliorer les conditions de strippage du catalyseur provenant de la réaction et permettre ainsi une meilleure récupération des hydrocarbures.

Comme indiqué ci-dessus, on peut réguler la température $T_2$ de la deuxième chambre de régénération en faisant varier, par exemple à l'aide d'une vanne à glissière, le débit de particules catalytiques circulant dans l'échangeur thermique, de façon à adapter la température du catalyseur régénéré au rapport massique catalyseur/hydrocarbures à craquer, ce qui permet l'optimisation de la réaction de conversion de ces hydrocarbures.

On peut également réguler, en plus du débit de circulation du catalyseur dans l'échangeur thermique, le débit du fluide oxydant de la première chambre de régénération, grâce à une sonde de température permettant de déterminer l'écart entre la température mesurée et la valeur de consigne et d'agir en conséquence sur les moyens d'alimentation en fluide oxydant.

Les catalyseurs susceptibles d'être régénérés selon le procédé de l'invention sont généralement ceux décrits dans l'art antérieur (par exemple dans le brevet US 4.405.445). Ces catalyseurs ont généralement, à l'équilibre, un taux en résidus hydrocarbonés et en coke supérieur à environ 1,3 % en poids, ainsi qu'une teneur en métaux lourds comprise entre environ 5.000 et 60.000 ppm.

Selon un mode particulièrement avantageux de mise en oeuvre de l'invention, on peut introduire (par des techniques conventionnelles d'imprégnation sur le catalyseur) des inhibiteurs de combustion du CO ou des accélérateurs de combustion du coke, comprenant par exemple des composés alcalino-terreux tels que ceux décrits dans les brevets EP 107.375, 120.096 et 32.277.

Ils peuvent être utilisés à une concentration comprise entre 0,001 et 5% et, de préférence, entre 0,1 et 2% en poids, par rapport au poids des particules catalytiques.

L'invention a également pour objet un dispositif de régénération en continu d'un catalyseur désactivé, par combustion en lit fluidisé du coke déposé sur ce catalyseur au cours d'une réaction de conversion d'hydrocarbures, ce dispositif comprenant, d'une part, une première chambre de régénération par combustion du coke déposé sur le catalyseur, cette première chambre étant équipée d'un conduit d'amenée du catalyseur désactivé, de moyens d'alimentation en un fluide contenant de l'oxygène et de moyens d'évacuation des effluents, d'autre part, une seconde chambre de régénération, munie d'un conduit d'amenée à partir de la première chambre du catalyseur partiellement régénéré, de seconds moyens d'alimentation en fluide de combustion, de moyens de séparation du catalyseur régénéré des gaz de combustion, chacune des chambres comprenant en outre un moyen de mesure de la température de combustion en lit fluidisé, ce dispositif étant caractérisé en ce qu'il comporte un échangeur thermique, des moyens de prélèvement dans ladite seconde chambre d'une fraction contrôlée de catalyseur chaud, en vue de maintenir la température de combustion dans cette chambre sensiblement égale à une première valeur de consigne inférieure à 950°C et, de préférence, 910°C, des moyens de transfert de cette fraction de catalyseur chaud audit échangeur thermique en vue de le refroidir, des moyens d'évacuation du catalyseur refroidi dudit échangeur thermique et de réinjection du catalyseur refroidi dans ladite première chambre, et des moyens de régulation de l'alimentation en fluide de combustion de ladite première chambre asservis au moyen de mesure de la température dans cette chambre, en vue de maintenir sensiblement cette température à une seconde valeur de consigne, inférieure à 730°C et, de préférence, comprise entre 675 et 710°C.

Les moyens de transfert du catalyseur chaud provenant de la seconde chambre de régénération peuvent alimenter la partie haute de l'échangeur thermique, de manière que le catalyseur s'écoule par gravité de haut en bas dans celui-ci, pour en être évacué après refroidissement à sa partie basse en direction de la première chambre de régénération.

Les moyens de transfert peuvent aussi aboutir à une entrée de la partie basse de l'échangeur thermique, pour que le catalyseur s'écoule de bas en haut en lit fluidisé dans l'échangeur.

Dans tous les cas, avantageusement, ledit échangeur thermique sera équipé d'un moyen de diffusion d'un fluide destiné à y maintenir le catalyseur à l'état fluidisé.

L'échangeur de chaleur peut être d'un type connu en soi. Il peut comprendre une calandre d'orientation verticale dans laquelle le catalyseur peut circuler à l'extérieur des tubes, le fluide de refroidissement circulant à l'intérieur de ces tubes. Selon un autre exemple de réalisation, le catalyseur régénéré et chaud peut circuler à l'intérieur des tubes et le fluide de refroidissement à l'extérieur.

L'échangeur peut être d'un autre type : la paroi constituant l'enveloppe de l'échangeur peut représenter une partie de la surface d'échange. Cette surface est réalisée sous forme de tubes-membranes : une pluralité de tubes où circule le fluide de refroidissement, disposés de manière concentrique et s'étendant parallèlement à l'axe longitudinal de l'échangeur, est reliée par des ailettes soudées longitudinalement de manière à former une surface externe continue étanche à la pression. La surface d'échange n'étant en général pas suffisante pour assurer l'intégralité de l'échange de chaleur requis, l'intérieur de l'échangeur peut être rempli d'une pluralité de tubes d'échange, avantageusement disposés selon au moins un cercle de manière sensiblement concentrique, mais de préférence régulièrement répartis. Des surfaces internes additionnelles peuvent en outre être immergées dans le lit fluidisé. Ces surfaces pourront être constituées soit de panneaux de tubes-menbranes, soit de faisceaux de tubes de diverses formes (tubes en U, en épingle, ou tubes baïonnette), soit de serpentins. Des collecteurs internes assurent la distribution d'eau et la collecte de la vapeur.

Cette configuration d'échangeur thermique à tubes-membranes présente les avantages suivants :

– l'augmentation de la surface d'échange pour un volume de l'échangeur donné ou une réduction des surfaces d'échange interne pour une surface totale constante. Ceci favorise la fluidisation du catalyseur à l'intérieur de l'échangeur, éliminant ainsi les risques de zones mortes ou d'agglomérations, ce qui améliore l'échange.

– la suppression du réfractaire interne, du fait que la température de la membrane, très proche de la température du fluide circulant à l'intérieur des tubes, reste suffisamment faible pour ne pas exiger une protection.

L'échangeur de chaleur peut être externe aux unités de régénération. Il peut aussi être disposé à l'intérieur de la première chambre de régénération, comme on l'exposera ci-après de forme plus détaillée, et, dans ce cas, il comprendra avantageusement une cloison délimitant un compartiment d'échange thermique de hauteur telle qu'elle disperse le niveau supérieur du lit fluidisé dense dans la chambre de régénération. Avantageusement, ledit échangeur thermique sera équipé d'un moyen de diffusion d'un fluide destiné à y maintenir le catalyseur à l'état fluidisé.

Le contrôle de la quantité de catalyseur chaud prélevée dans la seconde chambre de régénération sera, par exemple, assuré par une vanne disposée en aval ou en amont de l'échangeur thermique et asservie au moyen de mesure de la température dans cette chambre, cette vanne s'ouvrant dès que la température mesurée est supérieure à la température de consigne.

Diverses formes de mise en oeuvre de l'invention seront décrites ci-après en détail, à titre d'exemples non limitatifs, en référence aux dessins annexés. Sur ces dessins :

La figure 1 est un schéma d'une installation de craquage catalytique en lit fluidisé équipée d'un dispositif de régénération conforme à l'invention, dans l'échangeur thermique duquel le catalyseur circule de haut en bas ;

La figure 2 représente une autre installation de ce type, dans laquelle le catalyseur circule du bas vers le haut de l'échangeur thermique ;

La figure 3 est une vue partielle à plus grande échelle d'une variante où l'échangeur thermique du dispositif de régénération est disposé à l'intérieur de la première chambre de régénération.

Dans les dispositifs représentés, le catalyseur est régénéré dans un système de régénération en lit fluidisé dans lequel la deuxième chambre de régénération est disposée au-dessus de la première chambre. Cette forme de réalisation n'a bien entendu pas de caractère limitatif.

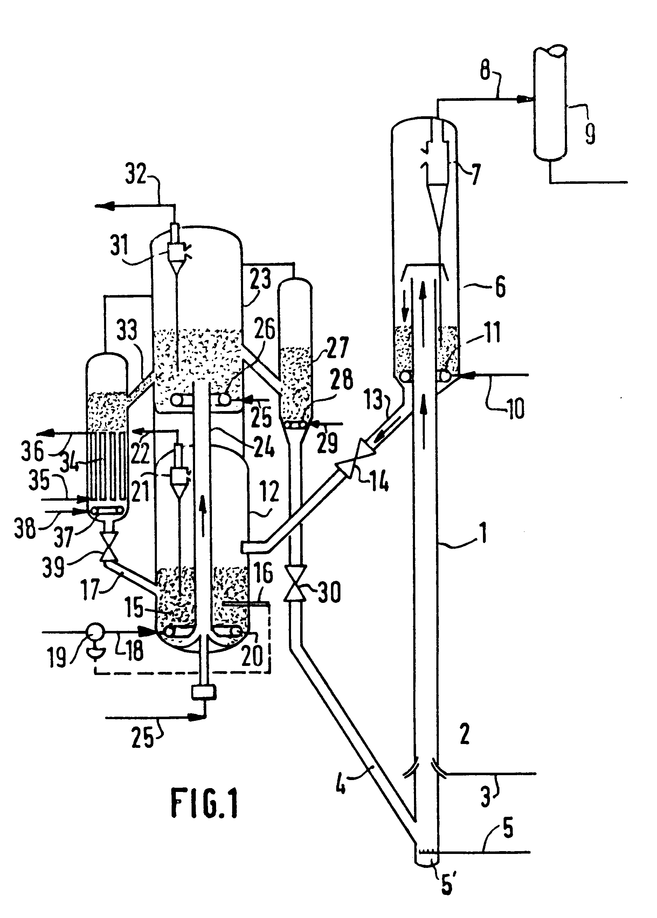

Le dispositif représenté sur la figure 1 comprend essentiellement une colonne 1, dite élévateur de charge ou encore "riser", alimentée à sa base :

– en charge à traiter, par des injecteurs 2, connectés à une ligne 3 d'alimentation;

– en catalyseur régénéré, par le conduit 4 ;

– en gaz de fluidisation par le diffuseur 5′, alimenté par la ligne 5.

La colonne 1 débouche à son sommet dans une enceinte 6, qui lui est concentrique et dans laquelle s'effectuent, d'une part, la séparation de la charge craquée et, d'autre part, le strippage du catalyseur désactivé. Les produits de la réaction sont séparés dans un cyclone 7, au sommet duquel est prévue une ligne d'évacuation 8 de la charge craquée vers l'unité de fractionnement 9, tandis que les particules de catalyseur désactivé sont strippées à la base de l'enceinte 6. A cet effet, une ligne 10 alimente en gaz de strippage, généralement de la vapeur d'eau, des diffuseurs 11 disposés régulièrement à la base de l'enceinte 6.

Les particules de catalyseur désactivé ainsi strippées sont évacuées vers une première chambre 12 de régénération, par l'intermédiaire d'un conduit 13, sur lequel est prévue une vanne de régulation 14. Ce conduit se termine ici par un déversoir permettant une dispersion homogène des grains de catalyseur, de préférence dans la partie diluée située au-dessus du lit fluidisé dense 15 de la première chambre 12. La température du lit fluidisé est mesurée à l'aide d'une sonde 16. Lorsque cette température décroît au-dessous d'une valeur $T_1$ de consigne, du fait de l'introduction de catalyseur relativement froid introduit comme on le verra ci-après par la ligne 17, le débit de fluide oxydant amené au diffuseur 20, disposé à la base de la chambre, par la ligne 18 munie d'une vanne de régulation 19, est augmenté jusqu'à ce que la température mesurée en 16 retrouve la valeur de consigne.

Environ 50 à 90% du coke (et sensiblement tous les composé résiduels hydrocarbonés) sont ainsi brûlés à contre-courant de l'air qui est injecté à la base du régénérateur. Le gaz de combustion riche en CO et $H_2O$, après avoir été débarrassé dans le cyclone 21 des poussières de catalyseur, est évacué par une ligne 22.

Les particules de catalyseur partiellement régénéré sont ensuite transférées vers une seconde chambre 23 de régénération, disposée au-dessus de la chambre 12, par le conduit 24 alimenté en air par la ligne 25. A la base de la seconde chambre de régénération peut être disposé un diffuseur 26 alimenté en air par la ligne 25.

Une partie des particules de catalyseur régénéré est évacuée latéralement dans une enceinte tampon 27. Dans cette enceinte, la fluidisation des particules est habituellement contrôlée par un diffuseur annulaire 28, alimenté en gaz de fluidisation, tel que de l'air ou un gaz inerte, par une ligne 29. A partir de l'enceinte 27, les particules du catalyseur régénéré sont recyclées par le conduit 4 à l'alimentation de l'élévateur 1, en quantité déterminée par l'ouverture ou la fermeture d'une vanne 30. A la partie supérieure de la chambre 23, les gaz de combustion sont séparés des particules de catalyseur par un cyclone 31 et sont évacuées par une ligne 32.

Une autre partie du catalyseur se déverse par le conduit 33 dans un échangeur thermique 34, d'un type connu en soi, comprenant une ligne d'arrivée 35 du fluide de refroidissement (généralement composé d'air, d'eau ou de vapeur d'eau, seuls ou en mélange) et une ligne de sortie 36 du fluide réchauffé. L'échangeur 34, comprend à sa base un diffuseur 37 alimenté par la ligne 38 en un gaz de fluidisation, tel que de l'air, destiné à améliorer l'échange thermique par le maintien d'une bonne fluidisation des grains de catalyseur dans l'échangeur. A la sortie de l'échangeur 34, une vanne 39, telle qu'une vanne à glissière, permet de contrôler le débit de catalyseur transféré d'une chambre à l'autre, dès que la température du catalyseur régénéré excède la valeur de consigne requise.

Le débit de catalyseur traversant l'échangeur thermique est ajusté pour maintenir la température régnant dans la deuxième chambre de régénération et donc, finalement, la température d'entrée dans la zone réactionnelle 1, à une température de consigne propre à la charge craquée dans l'unité. Lorsque la température du catalyseur régénéré est plus élevée que cette valeur de consigne, on accroît la quantité de catalyseur traversant l'échangeur thermique. Le refroidissement du catalyseur dans le lit fluidisé de la première chambre de régénération est alors compensé par une augmentation de l'alimentation en oxygène et une plus grande quantité de coke peut alors y être brûlée. A l'inverse, lorsque la température du catalyseur régénéré devient inférieure à la valeur de consigne nécessaire au bon fonctionnement de la réaction catalytique, le débit du catalyseur recyclé dans l'échangeur thermique est diminué et éventuellement stoppé, ce qui permet ainsi à la température du catalyseur régénéré de remonter.

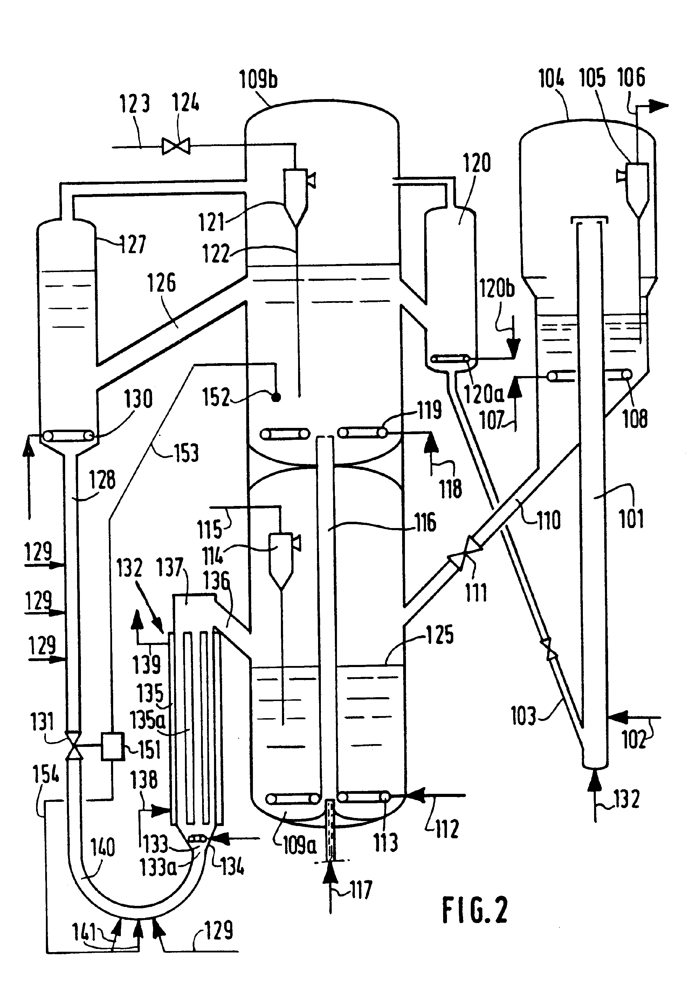

Dans la forme de réalisation de la figure 2, on retrouve une colonne 101 dite élévateur de charge, ou encore "riser", alimenté à sa base, par la ligne 102, en charge à traiter, par le conduit 103, et en particules d'un catalyseur de craquage, une zéolithe par exemple, par la ligne 132, en un gaz de fluidisation.

La colonne 101 débouche à son sommet dans une enceinte 104, qui lui est concentrique et dans laquelle s'effectuent, d'une part, la séparation de la charge craquée, et d'autre part, le strippage du catalyseur usé. La charge traitée est séparée dans un cyclone 105 qui est logé dans l'enceinte 104, au sommet de laquelle est prévue une ligne d'évacuation 106 de la charge craquée, tandis que les particules de catalyseur usé et strippé sont évacuées à la base de l'enceinte 104. Une ligne 107 alimente en gaz de strippage, généralement de la vapeur d'eau, des éléments de fluidisation ou injecteurs 108 disposés régulièrement à la base de l'enceinte 104.

Les particules de catalyseur usé ainsi strippées sont évacuées à la base de l'enceinte 104 vers une première unité 109a de régénération, par l'intermédiaire d'un conduit 110 sur lequel est prévue une vanne de régulation 111. Ce conduit se termine par un déversoir permettant une dispersion homogène des grains de catalyseur dans la partie diluée, située au dessus du lit dense 125 du premier régénérateur 109a. Ces grains de catalyseurs usé et strippé sont dilués et refroidis dans la partie inférieure de la première unité de régénération par un apport en partie de grains de catalyseur régénéré, qui ont été refroidis par un moyen de refroidissement ou échangeur thermique 132, que l'on décrit ci-dessous et qui proviennet de la seconde unité de régénération 109b disposée au-dessus de la première. Un conduit 126a assure le transport du catalyseur de la seconde unité vers un puits de desengagement 127 à la base duquel un anneau de fluidisation 130 apporte de l'air destiné à lui conférer une masse volumique correcte avant son écoulement du haut vers le bas dans une colonne tubulaire verticale de transfert 128. Tout le long de cette colonne 128 sont disposés des moyens d'injection d'un fluide d'aération 129, de la vapeur d'eau par exemple, régulièrement répartis et destinés à maintenir la masse volumique du catalyseur dans une plage bien déterminée, par exemple comprise entre 500 et 800 Kg/m³, correspondant à la fluidisation sans bulle.

A l'extrémité basse de la colonne et donc en amont de l'échangeur, une vanne 131 assure le contrôle du débit du catalyseur régénéré chaud alimentant l'extrémité inférieure 133 de l'échangeur thermique 132. Cette vanne peut être avantageusement remplacée par au moins un moyen d'injection 141 d'un fluide d'aération adapté pour réguler le débit du catalyseur dans l'échangeur. Ce moyen d'injection est généralement disposé sur la zone intermédiaire coudée 140, de préférence en son point le plus bas.

Le catalyseur chaud monte à travers l'échangeur thermique en lit fluidisé, de préférence dense, grâce à un anneau de fluidisation 134 alimenté en air qui l'aère et le distribue au travers de l'échangeur. Les plaques ou tubes 135a d'échange qui constituent l'échangeur sont entièrement noyées dans le lit fluidisé et le niveau du catalyseur, dans l'échangeur 132, est assuré par la position de la conduite d'évacuation 136. Celle-ci est située dans la partie supérieure latérale de l'échangeur et au voisinage immédiat du régénérateur 109a. Le catalyseur refroidi est alors évacué par débordement dans le premier régénérateur 109a et retombe par gravité avantageusement dans un lit fluidisé dilué, sensiblement au-dessus du lit fluidisé dense 125 du premier régénérateur 109a.

Au dessus du niveau du lit fluidisé dense de l'échangeur est aménagée une zone de désengagement ou s'effectue la séparation des particules de catalyseur d'une partie au moins de l'air de fluidisation ou d'aération. Cet air est en général évacué, par une conduite non représentée, à la partie supérieure 135 de l'échangeur et peut être éventuellement recyclé, comme il est chaud, à tous les niveaux des régénérateurs.

Dans la première unité de régénération, de préférence 50-90 % de coke et sensiblement tous les composés résiduels hydrogénés sont brûlés en lit fluidisé par combustion, de préférence à contre-courant de l'air qui est injecté à la base du régénérateur par une ligne 112 alimentant des injecteurs 113. Les particules du catalyseur sont entraînées par le gaz de combustion et séparées par des cyclones 114 internes, disposés avantageusement dans la partie supérieure de la première unité de régénération. Le gaz de combustion riche en hydrogène sulfuré, oxyde de carbone et eau est évacué par une ligne 115 sous pression pour un traitement ultérieur, tandis que les particules de catalyseur sont rejetées vers la base du premier régénérateur 109a. Elles sont ensuite transférées à la seconde unité de régénération 109b, située au-dessus de la première unité de régénération, par le conduit 116 alimenté en air par la ligne 117.

La base de la seconde unité de régénération est également alimentée en air par la ligne 118 et par les injecteur 119. La combustion du coke restant s'effectue à co-courant de l'air injecté.

Une partie des particules du catalyseur régénéré est évacuée latéralement dans une enceinte tampon 120. Les particules dont le débit est habituellement contrôlé par un diffuseur annulaire 120a alimenté en gaz (inerte, oxygène) sont recyclées par le conduit 103 à l'alimentation de l'élévateur 101 à l'aide d'un gaz de fluidisation injecté par la ligne 132. Ce conduit est maintenu aéré. Les gaz de combustion évacués à la partie supérieure de l'étage 109b sont traités dans un cyclone intérieur ou extérieur 121, à la base duquel les particules du catalyseur sont retournées par le conduit 122 au second étage 109b, tandis que les gaz de combustion sont évacués par la ligne 123 où une vanne de sécurité est prévue.

L'autre partie du catalyseur est transportée par le conduit 126 vers l'échangeur thermique 132 monté en parallèle. Celui-ci est constitué par des tubes membranes 135 formant l'enveloppe externe étanche. Ces tubes s'étendent de manière sensiblement parallèle à l'axe longitudinal de l'échangeur et sont reliés par des ailettes soudées longitudinalement de manière à constituer une enveloppe extérieure.

L'échangeur comprend à l'intérieur une pluralité de tubes 135a disposés concentriquement et répartis régulièrement autour de l'axe longitudinal de l'échangeur. Une ligne d'arrivée d'eau 138 alimente ces tubes internes et externes à la base de l'échangeur et une ligne de sortie 139 évacue le fluide réchauffé à sa partie supérieure.

Selon un autre mode de mise en oeuvre du procédé, non représenté sur la figure 2, l'extrémité inférieure 133 de l'échangeur 132 peut être reliée, par l'intermédiare de la partie coudée 140 comprenant le moyen d'injection du second fluide d'aération adapté à contrôler le débit de catalyseur dans l'échangeur, à la colonne 103 de recyclage du catalyseur vers l'alimentation de l'élévateur 101.

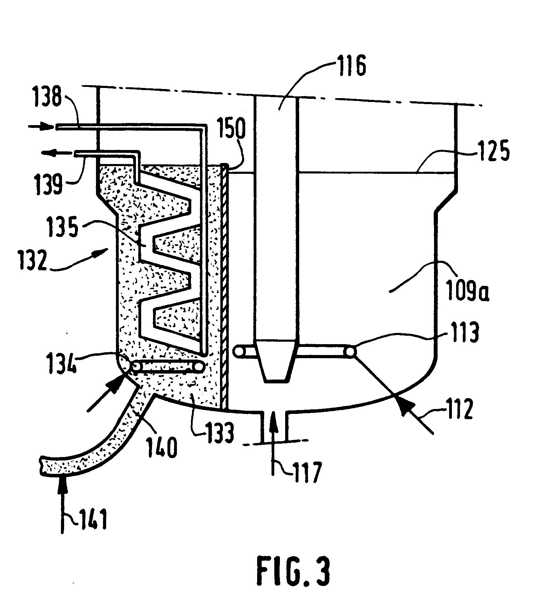

Selon un autre mode de mise en oeuvre du procédé illustré par la figure 3, l'échangeur 132 peut ne pas être externe. Il peut en effet être noyé dans le premier régénérateur 109a. Une cloison de séparation, 150, pouvant éventuellement servir de plaque d'échange thermique et de forme plane ou circulaire, délimite de façon étanche, avec une partie de la paroi du régénérateur, un compartiment d'échange thermique dans la zone de régénération. La dimension de cette plaque définissant la hauteur de l'échangeur est telle qu'elle dépasse la hauteur du lit fluidisé dense.

Le catalyseur régénéré et chaud, arrive à la base de l'échangeur par la partie coudée 140. Des moyens d'injection d'air 141 contrôlent le débit de catalyseur entrant dans l'échangeur. Le catalyseur est fluidisé par l'anneau de fluidisation 134 à l'extrémité inférieure 133 de l'échangeur et circule de bas en haut dans l'échangeur en se refroidissant au contact des plaques 135 alimentées en eau par la ligne 138. Le fluide réchauffé est évacué par la ligne 139. Le catalyseur déborde ensuite au dessus de la cloison 150 et retombe au-dessus du lit dense 125 de régénération.

Dans les cas des figures 2 et 3, on ajuste le débit de catalyseur traversant l'échangeur thermique en agissant sur le moyen de contrôle de débit (soit la vanne 131, soit le moyen d'injection 141), pour maintenir la température du second régénérateur à un niveau satisfaisant et donc la température du catalyseur régénéré et recyclé à l'entrée de l'élévateur à une temperature de consigne qui dépend de la charge à craquer.

Ces moyens de contrôle (131, 141) de débit du catalyseur sont asservis habituellement par des moyens d'asservissement 151 au moyen de mesure 152 de la température du lit dense du second régénérateur 109b, grâce à des lignes de liaisons 153 ou 154.

Lorsque la température du catalyseur dans la seconde unité de régénération dépasse la température de consigne, on dérive une partie plus importante du catalyseur issu du second régénérateur dans l'échangeur en ajustant le débit du catalyseur comme indiqué ci-dessus. La température de la première unité de régénération est alors abaissée et on peut y brûler une plus grande quantité de coke.

## Revendications

1. Procédé de régénération en continu d'un catalyseur, par combustion en lit fluidisé du cote déposé sur ce catalyseur au cours d'une réaction de conversion d'hydrocarbures, ce procédé étant du type dans lequel une proportion d'environ 50 à 90% dudit cote est brûlée dans une première étape, à une température $T_1$ ne dépassant pas environ 730°C et, de préférence comprise entre 650 et 710°C, dans une première chambre de régénération fonctionnant en lit fluidisé, où les grains de catalyseur à régénérer sont introduits essentiellement à contre-courant d'un fluide contenant de l'oxygène, les effluents gazeux de cette chambre, contenant la vapeur d'eau entraînée ou formée au cours de ladite combustion, étant évacués par un dispositif propre à cette première chambre, tandis que les 10 à 50% de coke résiduel sont brûlés au cours d'une deuxième étape de régénération, en présence d'un fluide contenant un excès d'oxygène par rapport à la stoechiométrie de la combustion, à une température $T_2$ supérieure à $T_3$ et inférieure à 950°C et, de préférence, à 910°C, dans une seconde chambre de régénération distincte de la première, ledit procédé étant caractérisé en ce que la température $T_2$ des grains de catalyseur régénéré provenant de la deuxième chambre de régénération et recyclés à la zone réactionnelle de conversion est maintenue à une valeur prédéterminée en fonction des besoins de la zone réactionnelle, par prélèvement d'une quantité contrôlée du catalyseur de la seconde chambre et par refroidissement de celui-ci à un niveau de température $T_3$ inférieur à $T_1$ et compris entre 400 et 700°C et, de préférence, entre 450 et 600°C, la quantité de catalyseur prélevée dans la seconde chambre de régénération et refroidie étant inférieure à 150% en poids et, de préférence, de 15 à 50% en poids de la masse de catalyseur en circulation dans la première chambre de régénération, cette fraction de catalyseur ainsi refroidie étant essentiellement réintroduite dans le lit fluidisé de la première chambre de régénération, dont la température de combustion est maintenue sensiblement égale à la valeur $T_1$ par une modification appropriée de la quantité de fluide contenant de l'oxygène introduite dans cette chambre, l'accroissement du débit du fluide oxydant alimentant la première chambre de régénération, consécutif à l'introduction dans celle-ci du catalyseur refroidi, étant compris entre 1 et 50% et, de préférence, entre 10 et 20% du débit normal de ce fluide, en l'absence d'introduction du catalyseur refroidi.

2. Procédé selon la revendication 1, caractérisé en ce que :

a- on introduit le catalyseur à régénérer et le fluide contenant de l'oxygène dans la première chambre de régénération, ledit fluide s'écoulant de bas en haut à contre-courant du catalyseur ;

b- on sépare les effluents gazeux dans la partie supérieure de ladite première chambre de régénération et l'on prélève le catalyseur partiellement régénéré à la base de cette chambre pour l'envoyer clans la deuxième chambre de régénération, où l'on réalise ladite seconde étape de régénération, à température plus élevée ;

c- on reprend une partie du catalyseur provenant de la seconde chambre dans un échangeur thermique, d'une part, pour refroidir ce catalyseur et, d'autre part, pour récupérer de la chaleur ;

d- on soutire de l'échangeur thermique ledit catalyseur ainsi refroidi, et on le recycle dans le lit fluidisé de la première chambre de régénération.

3. Procédé selon la revendication 2, caractérisé en ce que le fluide utilisé dans ledit échangeur thermique pour refroidir le catalyseur est utilisé pour stripper le catalyseur désactivé avant sa régénération.

4. Procédé selon l'une des revendications 1 à 3, caractérisé en ce que le rapport $CO/CO_2$, dans la première chambre de combustion, est compris entre 0,3 et 1,5 et, de préférence, entre 0,5 et 1,3.

5. Procédé selon l'une des revendication 1 à 4, caractérisé en ce que le catalyseur régénéré provenant de la seconde chambre de régénération s'écoule de haut en bas, par gravité, dans l'échangeur thermique.

6. Procédé selon l'une des revendications 1 à 4, caractérisé en ce que le catalyseur régénéré provenant de la seconde chambre de régénération s'écoule de bas en haut dans le dit échangeur thermique.

7. Procédé selon l'une des revendication 1 à 6, caractérisé en ce que, dans l'échangeur thermique, le catalyseur régénéré provenant de la seconde chambre de régénération est fluidisé par injection dans l'échangeur d'un fluide gazeux à une vitesse comprise entre 0,1 et 1 m/s.

8. Procédé selon l'une revendications 6 et 7 en combinaison, caractérisé en ce que le catalyseur régénéré est introduit à la base de l'échangeur thermique par un moyen de transfert présentant une zone coudée dans laquelle on maintient la masse isothermique du catalyseur sensiblement à une valeur correspondant à une fluidication sans bulle par injection d'un premier fluide d'aération.

9. Procédé selon la revendication 8, caractérisé en ce que le débit du catalyseur régénéré introduit dans l'échangeur thermique est régulé soit à l'aide d'une vanne disposée en amont dudit catalyseur, soit par injection d'un second fluide d'aération dans ladite zone coudée.

10. Procédé selon la revendication 9, caractérisé en ce que le débit dudit second fluide d'aération dans ladite zone coudée est comprise entre 0,01 et 0,05 kg/s/m² de section de ladite zone.

11. Dispositif de régénération en continu d'un catalyseur désactivé, par combustion en lit fluidisé du coke déposé sur ce catalyseur au cours d'une réaction de conversion d'hydrocarbures, ce dispositif comprenant, d'une part, une première chambre de régénération (12) par combustion du coke déposé sur le catalyseur, cette première chambre étant équipée d'un conduit (13) d'amenée de catalyseur désactivé, de moyens d'alimentation (18, 20) en un fluide contenant de l'oxygène et de moyens (22, 24) d'évacuation (2) des effluents, d'autre part, une seconde chambre de régénération (23), munie d'un conduit (24) d'amenée à partir de la première chambre du catalyseur partiellement régénéré, de seconds moyens (25, 26) d'alimentation en fluide de combustion, de moyens (31) de séparation du catalyseur régénéré des gaz de combustion, chacunes des chambres comprenant en outre un moyen (16, 25) de mesure de la température de combustion en lit fluidisé, ce dispositif étant caractérisé en ce qu'il comporte un échangeur thermique (34), des moyens (33) de prélèvement dans ladite seconde chambre (23) d'une fraction contrôlée de catalyseur chaud, en vue de maintenir la température de combustion dans cette chambre sensiblement égale à une première valeur de consigne inférieure à 950°C et, de préférence, à 910°C, des moyens de transfert de cette fraction de catalyseur chaud audit échangeur thermique (34) en vue de le refroidir, des moyens d'évacuation (17) de catalyseur refroidi dudit échangeur thermique et de réinjection de ce catalyseur refroidi dans la dite première chambre(12), et des moyens (19) de régulation de l'alimentation en fluide de combustion de ladite première chambre asservis au moyen (16) de mesure de la température dans cette première chambre, en vue de maintenir sensiblement cette température à une seconde valeur de consigne, inférieure à 730°C et, de préférence, comprise entre 650 et 710°C.

12. Dispositif selon la revendication 11, caractérisé en ce qu'une vanne (39) disposée en aval ou en amont dudit échangeur thermique (34) est asservie au moyen (25) de mesure de la température de combustion dans la seconde chambre de régénération (23) et contrôle la quantité de catalyseur prélevée dans cette chambre et refroidie dans ledit échangeur thermique.

13. Dispositif selon l'une des revendications 11 et 12, caractérisé en ce que ledit échangeur thermique (34) est équipé d'un moyen (37) de diffusion d'un fluide apte à y maintenir le catalyseur à l'état fluidisé.

14. Dispositif selon l'une des revendications 11 à 13, caractérisé en ce que la seconde chambre de régénération (23) est disposée au-dessus de la première chambre (12), dans laquelle le catalyseur désactivé à régénérer s'écoule sensiblement à contre-courant du fluide d'oxydation, et en ce que ledit échangeur thermique (34) est situé à un niveau intermédiaire entre lesdites chambres (12) et (23), de manière que la fraction de catalyseur chaud prélevée dans la seconde chambre et transférée dans l'échangeur se déplace par gravité.

15. Dispositif selon la revendication 14, caractérisé en ce que la fraction de catalyseur traversant l'échangeur thermique (34) s'y déplace verticalement.

16. Dispositif selon la revendication 14, caractérisé en ce que les moyens de transfert (126, 128, 140) alimentant la partie basse de l'échangeur thermique (137) de façon telle que le catalyseur sy écoule de bas en haut en lit fluidisé.

17. Dispositif selon la revendication 16, caractérisé en ce que lesdits moyens de transfert comprennent, au voisinage dudit échangeur (132), une partie coudée (140) dont la partie sensiblement la plus basse comporte au moins un moyen d'injection (141) d'un second fluide d'aération adapté à réguler le débit de catalyseur.

18. Dispositif selon l'une des revendications 11 à 17, caractérisé en ce que l'échangeur thermique (34, 137) est disposé à l'extérieur des chambre de régénération.

19. Dispositif selon l'une des revendications 11 à 17, caractérisé en ce que l'échangeur thermique (132) comporte une enveloppe étanche contenant une pluralité de tubes de refroidissement s'étendant longitudinalement selon son axe et une pluralité de tubes de refroidissement (135a) disposés selon au moins un cercle sensiblement concentrique à travers lequel circule un fluide de refroidissement.

20. Dispositif selon l'une des revendication 11 à 16, caractérisé en ce que l'échangeur thermique est situé à l'intérieur de la première chambre de régénération et comporte une cloison (150) délimitant un compartiment d'échange thermique, de hauteur telle qu'elle dépasse la surface supérieure du lit fluidisé dense dans ladite chambre.

## Claims

1. A process for continuously regenerating a catalyst by combustion in a fluidised bed of the coke deposited on said catalyst in the course of a reaction for the conversion of hydrocarbons, said process being of the type in which a proportion of about 50 to 90 % of said coke is burnt in a first stage at a temperature $T_1$ not exceeding 730°C and, preferably, between 650°C and 710°C in a first regeneration chamber operating in a fluidised bed, in which the catalyst particles to be regenerated are introduced substantially countercurrently to a fluid containing oxygen, the gaseous effluents of this chamber, which contain water vapour entrained or formed during this combustion, being discharged by a device suitable for this first chamber, while 10 to 50 % of the residual coke is burnt in the course of a second regeneration stage in the presence of a fluid containing excess oxygen in relation to the stoichiometry of the combustion at a temperature $T_2$ higher than $T_1$ and below 950°C and, preferably, below 910°C in a second regeneration chamber separate from the first chamber, said process being characterised in that the temperature $T_2$ of the regenerated catalyst particles originating from the second regeneration chamber and recycled to the conversion reaction zone is maintained at a predetermined value as a function of the requirements of the reaction zone, by taking a controlled amount of catalyst from the second chamber and by cooling the latter at a temperature level $T_3$ which is lower than $T_1$ and which is between 400 and 700°C and, preferably, between 450 and 600°C, the amount of catalyst taken in the second regeneration chamber and cooled being less than 150 % by weight and, preferably, from 15 to 150 % by weight of the mass of catalyst circulating in the first regeneration chamber, said fraction of catalyst thus cooled being substantially reintroduced into the fluidised bed of the first regeneration chamber, the combustion temperature of which is maintained substantially equal to the value $T_1$ by suitable adjustment of the amount of fluid containing oxygen introduced into this chamber, the increase in the rate of flow of oxidising fluid supplying the first regeneration chamber, following the introduction into the latter of cooled catalyst, being between 1 and 50 % and, preferably, between 10 and 20 % of the rate of flow of this fluid, in the absence of the introduction of cooled catalyst.

2. A process according to claim 1, characterised in that:

a- the catalyst to be regenerated and the fluid containing oxygen are introduced into the first regeneration chamber, said fluid flowing from the bottom upwards countercurrently to the catalyst;

b- the gaseous effluents are separated in the upper part of said first regeneration chamber and the partially regenerated catalyst is taken at the base of said chamber so as to forward it into the second regeneration chamber in which said second regeneration stage is carried out at a higher temperature;

c- a portion of the catalyst originating from the second chamber is returned to a heat exchanger, on the one hand, to cool said catalyst and, on the other hand, to recover the heat;

d- said catalyst thus cooled is drawn off from the heat exchanger and it is recycled into the fluidised bed of the first regeneration chamber.

3. A process according to claim 2, characterised in that the fluid used in said heat exchanger to cool the catalyst is used to strip the deactivated catalyst prior to its regeneration.

4. A process according to any one of claims 1 to 3, characterised in that the $CO/CO_2$ ratio in the first combustion chamber is between 0,3 and 1,5 and, preferably, between 0,5 and 1,3.

5. A process according to any one of claims 1 to 4, characterised in that the regenerated catalyst originating from the second regeneration chamber flows from the top downwards, under gravity, into the heat exchanger.

6. A process according to any one of claims 1 to 4, characterised in that the regenerated catalyst originating from the second regeneration chamber flows from the bottom upwards into said heat exchanger.

7. A process according to any one of claims 1 to 6, characterised in that, in the heat exchanger, the regenerated catalyst originating from the second regeneration chamber is fluidised by injection into the exchanger in a gaseous fluid at a rate of between 0,1 and 1 m/s.

8. A process according to one of claims 6 and 7 in combination, characterised in that the regenerated catalyst is introduced at the base of the heat exchanger by a transfer means having an elbow zone in which the isothermal mass of the catalyst is maintained substantially at a value corresponding to a fluidisation without bubbles by injection of a first aerating fluid.

9. A process according to claim 8, characterised in that the rate of flow of the regenerated catalyst introduced into the heat exchanger is controlled either by means of a valve disposed upstream of said catalyst or by injecting a second aerating fluid into said elbow zone.

10. A process according to claim 9, characterised in that the rate of flow of said second aerating fluid in said elbow zone is between 0,01 and 0,05 $kg/s/m^2$.

11. A device for the continuous regeneration of a deactivated catalyst by combustion in a fluidised bed of the coke deposited on said catalyst in the course of a reaction for the conversion of hydrocarbons, said device comprising, on the one hand, a first chamber (12) for regeneration by combustion of the coke deposited on the catalyst, said first chamber being provided with an inlet duct (13) for deactivated catalyst, means (18, 20) for supplying a fluid containing oxygen and means (22, 24) for discharging effluents, and on the other hand, a second regeneration chamber (23) provided with an inlet duct (24) from the first chamber for partly regenerated catalyst, second means (25, 26) for supplying combustion fluid, means (31) for separating the regenerated catalyst from the combustion gases, each of the chambers further comprising a means (16, 25) for measuring the combustion temperature in a fluidised bed, said device being characterised in that it comprises a heat exchanger (34), means (33) for taking from said second chamber (23) a controlled fraction of hot catalyst for the purpose of maintaining the combustion temperature in said chamber substantially equal to a first set value below 950°C and, preferably, below 910°C, means for transferring said fraction of hot catalyst to said heat exchanger (34) so as to cool it, means (17) for discharging cooled catalyst from said heat exchanger and for reinjecting said cooled catalyst into said first chamber (12), and means (19) for controlling the supply of combustion fluid to said first chamber under the control of means (16) for measuring the temperature in said first chamber, so as to maintain this temperature substantially at a second set value below 730°C and, preferably, between 650 and 710°C.

12. A device according to claim 11, characterised in that a valve (39) disposed downstream or upstream of said heat exchanger (34) is under the control of means (25) for measuring the combustion temperature in the second regeneration chamber (23) and controls the amount of catalyst taken from said chamber and cooled in said heat exchanger.

13. A device according to either of claims 11 and 12, characterised in that said heat exchanger (34) is provided with a means (37) for diffusing a fluid suitable for maintaining the catalyst in a fluid state therein.

14. A device according to any one of claims 11 to 13, characterised in that the second regeneration chamber (23) is disposed above the first chamber (12), in which the deactivated catalyst to be regenerated flows substantially countercurrently to the oxidising fluid, and in that said heat exchanger (34) is disposed at an intermediate level between said chambers (12) and (23) so that the fraction of hot catalyst taken from the second chamber and transferred into the exchanger moves under gravity.

15. A device according to claim 14, characterised in that the fraction of catalyst passing through the heat exchanger (34) moves vertically therein.

16. A device according to claim 14, characterised in that the transfer means (126, 128, 140) supply the lower part of the heat exchanger (137) in such way that the catalyst flows therein from the bottom upwards in a fluidised bed.

17. A device according to claim 16, characterised in that said transfer means comprise, in the vicinity of said exchanger (132), an elbow portion (140), the substantially lowest part of which comprises at least one means (141)for injecting a second aerating fluid suitable for controlling the flow rate of catalyst.

18. A device according to any one of claims 11 to 17, characterised in that the heat exchanger (34, 137) is disposed outside the regeneration chamber.

19. A device according to any one of claims 11 to 17, characterised in that the the heat exchanger (132) comprises a fluidlight casing containing a plurality of cooling tubes which extend longitudinally along its axis and a plurality of cooling tubes (135a) which are disposed on at least one substantially concentric circle, through which a cooling fluid circulates.

20. A device according to any one of claims 11 to 16, characterised in that the the heat exchanger is disposed inside the first regeneration chamber and comprises a partition (150) defining a heat exchange compartment, of such a height that it extends beyond the upper surface of the dense fluidised bed in said chamber.

**Patentansprüche**

1. Verfahren zum kontinuierlichen Regenerieren eines Katalysators durch Verbrennung in einem auf den Katalysator aufgeschütteten Fließbett aus Koks in Verlauf einer Reaktion zur Umwandlung von Kohlenwasserstoffen, wobei gemäß diesem Verfahren ein Anteil von etwa 50 - 90 % der Koksmenge in einer ersten Stufe bei einer Temperatur $T_1$, die einem Wert von ca. 730°C nicht übersteigt und bevorzugt im Bereich von 650 bis 710°C liegt, in einer ersten im Fließbett wirksamen Regenerierungskammer verbrannt wird, in welche die zu regenerierenden Katalysatorkörner weitgehend nach dem Gegenstromprinzip durch ein sauerstoffhaltiges Fluid eingeführt werden, und wobei die aus der Kammer stammenden Abgase, die den im Verlauf der Verbrennung mitgeführten oder gebildeten Wasserdampf enthalten, durch eine zur ersten Kammer gehörige Vorrichtung abgezogen werden, während die verbleibenden 10 bis 50 % Restkoks in einer zweiten Regenerierungsstufe in Gegenwart eines Fluids mit einem relativ zur Verbrennungsstöchiometrie vorhandenen Sauerstoffüberschuß bei einer Temperatur $T_2$, die über dem Wert $T_1$ und unter 950°C und möglichst bei 910°C liegt, in einer von der ersten Kammer getrennten zweiten Regenerierungskammer verbrannt werden, dadurch gekennzeichnet, daß die Temperatur $T_2$ der Körner des regenerierten Katalysators, die aus der zweiten Regenerierungskammer stammen und in die Umwandlungsreaktionszone zurückgeführt werden, auf einem Wert gehalten wird, der in Abhängigkeit vom Bedarf der Reaktionszone durch Entnahme einer kontrollierten Mengen des Katalysators aus der zweiten Kammer und durch Abkühlung desselben auf eine unter dem Wert $T_1$ und zwischen 400 und 700°C und möglichst im Bereich von 450 bis 600°C liegende Temperatur $T_3$ vorbestimmt wird, wobei die der zweiten Regenerierungskammer entnommene und abgekühlte Katalysatormenge unter 150 Gew.-% und bevorzugt im Bereich von 15 bis 50 Gew.% der in der ersten Regererierungskammer im Umlauf befindlichen Katalysatormasse liegt, wobei der auf diese Weise abgekühlte Katalysatoranteil weitgehend in das Fließbett der ersten Regenerierungskammer zurückgeführt wird, deren Verbrennungsemperatur durch entsprechende Veränderung der sauerstoffhaltigen und in diese Kammer eingeführten Fluidmenge im wesentlichen auf einer dem Wert $T_1$ entsprechenden Temperatur gehalten wird, und wobei die Erhöhung der Durchsatzleistung an Oxydationsfluid zur Versorgung der ersten Regenerierungskammer nach Zugabe des abgekühlten Katalysators zwischen 1 und 50 % und möglichst zwischen 10 und 20 % der normalen Durchsatzleistung dieses Fluids bei Nichtzugabe des abgekühlten Katalysators ausmacht.

2. Verfahren nach Anspruch 1, dadurch gekennzeichnet, daß:

a- der zu regenerierende Katalysator und das sauerstoffhaltige Fluid in die erste Regererierrungskammer eingeführt werden, wobei das Fluid von unten nach oben im Gegenstrom zum Katalysator strömt;

b- die Abgase im oberen Teil der ersten Regenerierungskammer abgeschieden werden und eine teilweise Entnahme des am Boden der Kammer regenerierten Katalysators erfolgt, um der zweiten Regenerierungskammer zugeführt zu werden, in der die zweite Regenerierungsstufe bei einer höheren Temperatur abläuft;

c- ein Teil des aus der zweiten Kammer stammenden Katalysators in einen Wärmeaustauscher eingeführt wird, um zum einen den Katalysator abzukühlen und zum anderen die Wärme zurückzugewinnen; und

d- der auf diese Weise abgekühlte Katalysator aus dem Wärmeaustauscher abgezogen und in das Fließbett der ersten Regenerierungskammer zurückgeführt wird.

3. Verfahren nach Anspruch 2, dadurch gekennzeichnet, daß das im Wärmeaustauscher zur Abkühlung des Katalysators verwendete Fluid benutzt wird, um den deaktivierten katalysator vor seiner Regenerierung zu strippen.

4. Verfahren nach irgendeinem der Ansprüche 1 bis 3, dadurch gekennzeichnet, daß das Verhältnis von $CO/CO_2$ in der ersten Verbrennungskammer zwischen 0,3 und 1,5 und bervorzugt zwischen 0,5 und 1,3 liegt.

5. Verfahren nach irgendeinem der Ansprüche 1 bis 4, dadurch gekennzeichnet, daß der aus der zweiten Regenerierungskammer stammende regenerierte Katalysator den Wärmeaustaucher nach dem Schwerkraftprinzip von oben nach unten durchströmt.

6. Verfahren nach irgendeinem der Ansprüche 1 bis 4, dadurch gekennzeichnet, daß der aus der zweiten Regenerierungskammer stammende regenerierte Katalysator den Wärmeaustauscher von unten nach oben durchströmt.

7. Verfahren nach irgendeinem der Ansprüche 1 bis 6, dadurch gekennzeichnet, daß der aus der zweiten Regenerierungskammer stammende regenerierte Katalysator im Wärmeaustauscher fluidisiert wird, indem ein gasförmiges Medium mit einer Geschwindigkeit zwischen 0.1 und 1 m/Sek. in den Wärmeaustauscher eingespritzt wird.

8. Verfahren in Kombination nach irgendeinem der Ansprüche 6 und 7, dadurch gekennzeichnet, daß der regenerierte Katalysator am Boden des Wärmeaustauschers durch eine Übergabevorrichtung mit einem gekrümmten Abschnitt eingeführt wird, in dem die isothermische Masse des Katalysators weitgehend auf einem Wert gehalten wird, der durch Einspritzung eines ersten Belüftungsfluids zu einer fluidisierung ohne Blasenbildung führt.

9. Verfahren nach Anspruch 8, dadurch gekennzeichnet, daß die in den Wärmeaustauscher eingeführte Menge des regenerierten Katalysators entweder mit Hilfe eines dem Katalysator vorgeschalteten Schiebers oder durch Einspritzung eines zweiten Belüftungsfluids in den Krümmungsabschnitt geregelt wird.

10. Verfahren nach Anspruch 9, dadurch gekennzeichnet, daß die Durchsatzleistung des zweiten Belüftungsfluids im gekrümmten Abschnitt zwischen 0,01 und 0,05 kg/Sek./m² Fläche dieses Abschnitts liegt.

11. Vorrichtung zum kontinuierlichen Regenerieren eines deaktivierten Katalyators durch Verbrennung in einem auf dem Katalysator augeschütteten Koksfließbett im Verlauf einer Reaktion zur Umwandlung von Kohlenwasserstoffen, wobei die Vorrichtung zum einen eine erste Kammer (12) zur Regenerierung durch Verbrennung des auf dem Katalysator befindlichen Kokses umfaßt und die erste Kammer mit einer Leitung (13) zur Zuführung des deaktivierten Katalysators, mit vorrichtungen (18, 20) zur Zuführung eines sauerstoffhaltigen Fluids und Vorrichtungen (22, 24) zur Ableitung (2) von Abgasen versehen ist, und wobei die Vorrichtung zum anderen eine zweite Regenerierungskammer (23) mit einer Leitung (24) zur Zuführung von teilweise regeneriertem Katalysator aus der ersten Kammer, mit zweiten Vorrichtungen (25, 26) zur Zuführung des Verbrennungsmediums, mit Vorrichtungen (31) zur Abscheidung des regenerierten Katalysators aus den Verbrennungsgasen besitzt, wobei jede Kammer darüberhinaus mit einer vorrichtung (16, 25) zur Messung der Verbrennungstemperatur im Fließbett versehen ist, dadurch gekennzeichnet, daß sie umfaßt: einen Warmeaustauscher (34); Vorrichtungen (33) zur Entnahme einer kontrollierten Menge des heißen Katalysators aus der zweiten Kammer (23), um die Verbrennungstemperatur in dieser Kammer auf einer Temperatur zu halten, die weitgehend einem ersten Einstellwert von unter 950°C und bevorzugt 910°C entspricht; Vorrichtungen, um den Anteil an heißem Katalysator zur Abkühlung an den Wärmeaustauscher (34) zu übergeben; Vorrichtungen (17), um den abgekühlten Katalysator aus dem Wärmeaustauscher abzuziehen und wieder in die erste Kammer (12) zurückzuführen; und Vorrichtungen (19) zur Regelung der Verbrennungsfluidzufuhr in die erste Kammer in Abhängigkeit von der Vorrichtung (16) zur Messung der Temperatur in dieser ersten Kammer, um diese Temperatur weitgehend auf einem zweiten Einstellwert zu halten, der unter 730°C und bevorzugt im Bereich von 650 und 710°C liegt.

12. Vorrichtung nach Anspruch 11, dadurch gekennzeichnet, daß ein dem Wärmeaustauscher (34) nach- oder vorgeschalteter Schieber (34) über die Vorrichtung (25) zur Messung der Verbrennungstemperatur in der zweiten Regenerierkammer (23) gesteuert wird und die Menge des aus dieser Kammer entnommenen und im Wärmeaustauscher abgekühlten Katalysators regelt.

13. Vorrichtung nach irgendeinem der Ansprüche 11 und 12, dadurch gekennzeichnet, daß der Wärmeaustauscher (34) mit einer Vorrichtung (37) zur Verteilung eines Fluids ausgestattet ist, mit dem der im Wärmeaustauscher befindliche Katalysator im Fließzustand gehalten werden kann.

14. Vorrichtung nach irgendeinem der Ansprüche 11 bis 13, dadurch gekennzeichnet, daß die zweite Regenerierungskammer (23) oberhalb der ersten Kammer (12) angeordnet ist, welche der zu regenerierende deaktivierte Katalysator weitgehend im Gegenstrom zum Oxydationsfluid durchströmt, und daß der Wärmeautauscher (34) sich auf einer zwischen den Kammern (12) und (23) liegenden Ebene befindet dergestalt, daß die Bewegung des aus der zweiten Kammer abgezogenen und dem Wärmeaustauscher zugeführten Anteils an heißem Katalysator durch Schwerkraft erfolgt.

15. Vorrichtung nach Anspruch 14, dadurch gekennzeichnet, daß der den Wärmeaustauscher (34) passierende Anteil des Katalysators sich in vertikaler Richtung bewegt.

16. Vorrichtung nach Anspruch 14, dadurch gekennzeichnet, daß die Übergabevorrichtungen (126, 128, 140) den unteren Teil des Wärmeaustauschers (137) so beschicken, daß der Katalysator dort im Fließbett von unten nach oben strömt.

17. Vorrichtung nach Anspruch 16, dadurch gekennzeichnet, daß die Übergabevorrichtungen im Bereich des Wärmeaustauschers (132) einen gekrümmten Abschnitt (140) umfassen, an dessen im wesentlichen unterstem Punkt sich eine Einspritzvorrichtung (141) für ein zweites Belüftungsfluid befindet, mit der die Katalysatordurchsatzleistung geregelt werden kann.

18. Vorrichtung nach irgendeinem der Ansprüche 11 bis 17, dadurch gekennzeichnet, daß sich der Wärmeaustauscher (34, 137) außerhalb der Regenerierungskammer befindet.

19. Vorrichtung nach irgendeinem der Ansprüche 11 bis 17, dadurch gekennzeichnet, daß der Wärmeaustauscher (132) eine dichte Verkleidung mit einer Vielzahl von in Längsrichtung verlaufenden Kühlrohren und einer Vielzahl von Kühlrohren (135a) umfaßt, die mindestens einen weitgehendst konzentrischen Kreislauf bilden, in dem ein Kühlmedium umgewälzt wird.

20. Vorrichtung nach irgendeinem der Ansprüche 11 bis 16, dadurch gekennzeichnet, daß sich der Wärmeaustauscher im Innern der ersten Regenerierungskammer befindet und eine Trennwand (150) zur Abgrenzung eines Wärmeaustauscherabteils umfaßt, die in der Höhe die Oberfläche des dichten Fließbetts in der Kammer überragt.

FIG.1

FIG.2

FIG.3